# EUROPEAN PATENT SPECIFICATION

(11) **EP 2 823 928 B1**
(45) Date of publication and mention of the grant of the patent: **17.08.2016**
(21) Application number: 13758248.2
(22) Date of filing: 01.03.2013
(51) Int. Cl.: B62D 21/15, B62D 25/20

(54) **COUPLING STRUCTURE**
KOPPLUNGSSTRUKTUR
JOINT STRUCTUREL DE CAROSSERIE

(30) Priority: 06.03.2012 JP 2012049295; 14.03.2012 JP 2012057189
(43) Date of publication of application: 14.01.2015
(73) Proprietor: JFE Steel Corporation, Tokyo 100-0011 (JP)
(72) Inventor: SHIOZAKI, Tsuyoshi, Tokyo 100-0011 (JP)
(74) Representative: Stebbing, Timothy Charles
(86) International application number: PCT/JP2013/055658
(87) International publication number: WO 2013/133157

(56) References cited:
- EP-A1- 2 230 156
- EP-A2- 2 011 719
- WO-A1-2007/052133
- JP-A- 2005 138 655
- JP-A- 2008 184 105
- JP-A- 2010 111 149
- JP-A- 2011 143 762
- JP-U- H0 532 252
- US-A1- 2010 156 146
- US-A1- 2012 049 582

## Description

### Field

The present invention relates to a joint structure of a press-bent part of a metal sheet, and particularly relates to a joint structure composed of a press-bent part of a metal sheet, the joint structure being discontinuously split at a longitudinal end portion thereof along three wall surfaces of a frame part and that is suitable for use in joining frame parts.

### Background

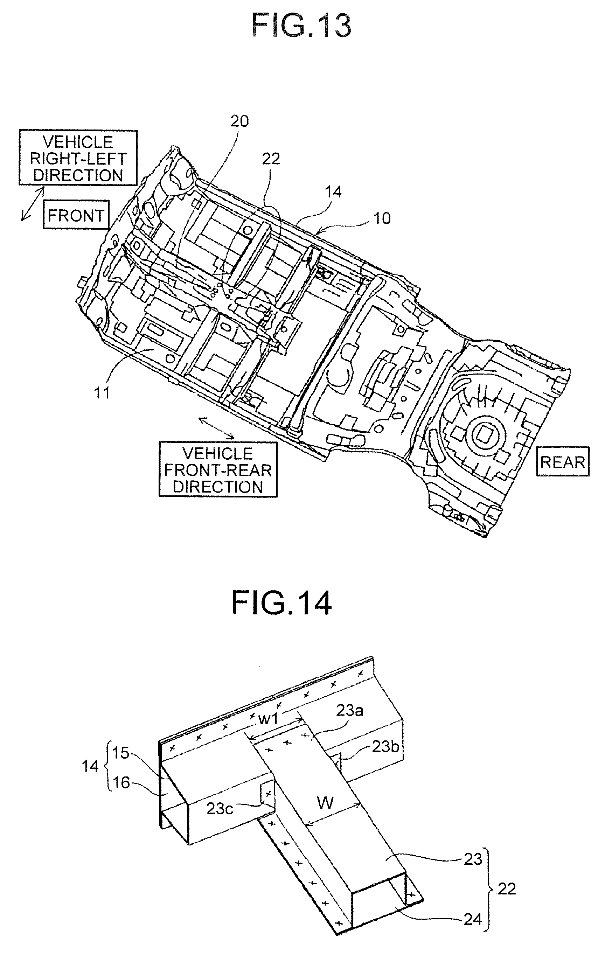

As illustrated in FIG. 13, a floor structure of a vehicle such as an automobile is provided with a panel part 10 and frame parts that are arranged for reinforcing the panel part 10 and that have a hat-like cross-sectional shape (refer to Non Patent Literature 1). Of these frame parts, some are arranged such that longitudinal directions of the parts lie along a vehicle front-rear direction and some are arranged such that the longitudinal directions of the parts lie along a vehicle right-left direction. The frame parts that are arranged such that the longitudinal direction of the parts lie along the vehicle front-rear direction include side sills 14 arranged at right and left lateral positions of the vehicle and extension members extending from front side members. The frame parts that are arranged such that the longitudinal direction of the parts lie along the vehicle right-left direction include cross members 22 connecting the side sills 14 with a center tunnel 20. These frame parts play an important role for strength and rigidity of the vehicle. In FIG. 13, reference sign 11 indicates a floor panel.

Among these frame parts, to both end portions in the longitudinal direction of the cross member 22, the side sill 14 and the center tunnel 20 are joined respectively. The cross member 22 serves as a load transmission path upon a side collision, and hence is formed of a high-strength steel sheet. In order to allow even a high-strength steel sheet lacking in formability to be processable, both of the longitudinal end portions of the cross member 22 are shaped to be formable by only bending.

As described in Patent Literature 1 and Non Patent Literature 1, each of both the longitudinal end portions of a conventional cross member 22 is discontinuously split into three, along longitudinal end portions of three wall surfaces thereof, and each of the split portions has a joint structure that is joined to another part.

As described in Patent Literature 2, there is also a joint structure in which a longitudinal end portion of a part is press-formed to constitute a continuous joint portion and is joined to another part.

In addition, there is a joint structure in which an end portion of a frame part is directly joined to another part by weld metal, and a joint structure in which a box structure formed at an end portion of a frame part is screwed to another part.

Among these joint structures, the joint structure that is directly joined by weld metal and the joint structure that involves screwing require time in the joining and manufacture of the joint structures, and production efficiencies thereof are decreased.

In the continuous joint structure by press forming described in Patent Literature 2, the joint portion is expanded upon the press forming, and thus a sheet thickness is reduced, resulting in occurrence of cracking during the press forming, and/or lower rigidity of the joint than that of the frame part main body.

In the present invention, it has been noted that there is a possibility that the occurrence of cracking may be suppressed and the rigidity may be maintained high without reducing the sheet thickness of the joint portion with the joint structures, which are described in Patent Literature 1 and Non Patent Literature, in which the longitudinal end portions of the frame parts are split into three, which are formable by only the bending, to which the high-strength steel sheets are applicable.

However, as illustrated in FIG. 14, end portions of three wall surfaces (a bottom wall end portion 23a, and side wall end portions 23b and 23c) of a member (hereinafter called hat-section member) 23, which has a hat-like cross-sectional shape, of the conventional cross member 22 are discontinuously formed, respectively. A width w1 of the bottom wall end portion 23a is within a range of a width W of a bottom wall of a central portion of the hat-section member 23. These discontinuous end portions 23a, 23b, and 23c are overlapped and joined with side walls of a hat-section member 15 of the side sill 14 or with the center tunnel 20 (refer to FIG. 13).

In FIG. 14, reference sign 16 indicates a flat member of the side sill 14, and reference sign 24 indicates a flat member of the cross member 22.

In order to design an automotive body of a high rigidity, a method has been studied, for analyzing a load path that is a transmission path of a load inside a structure when for example a load is applied to a part of the body. With respect to the joint portion of the hat-section member, as described in Non Patent Literature 2, ridge lines of the hat-section member are known to serve as an important load path. According to the description of Non Patent Literature 2, the load path extends from a ridge line of a hat-section member via a welded portion to reach a ridge line of another hat-section member. This indicates that relative positions between the ridge lines and the welded portion affect the load path.
Patent Literature 3 discloses a joint structure in accordance with the preamble of claim 1.
Patent Literature 4 discloses a structural member for a vehicle in which a plate member is formed to have a U-shaped cross-section by a pressing process.

### Citation List

### Patent Literature

Patent Literature 1: Japanese Patent Application Laid-open No. 2010-247795
Patent Literature 2: Japanese Patent Application Laid-open No. 2006-240602
Patent Literature 3: US 2012/049582 A1
Patent Literature 4: EP 2 230 156 A1

Non Patent Literature 1: Jiken Center Structural Investigation Series, Toyota Corolla Axio, p. 143.
Non Patent Literature 2: Kobayashi et al.,
Evaluation of Thin-walled Structure by U*, Society of Automotive Engineers of Japan Convention Proceedings, No. 34-11, pp. 5-10, 2011 .

### Summary

### Technical Problem

However, as represented by Patent Literature 1 and Non Patent Literature 1, the width w1 of the portion of the conventional joint structure joined with the side sill 14 or the center tunnel 20 (refer to FIG. 13) is small as illustrated in FIG. 14 and it is difficult to demand the joint structure for high rigidity on top of high strength.

Further, the description of Non Patent Literature 2 indicates that the relative positions between the ridge lines and the welded portion of the hat-section member are related to the load path. However, Non Patent Literature 2 neither discloses nor suggests how the ridge lines and the welded portion should be arranged in order to achieve an efficient load path.
Meanwhile, Patent Literature 3 shows a structure in which a bottom end portion of a hat-section member is narrower in width than a line extended from a ridge line of the bottom wall.

The present invention has been made in view of the problem described above, and it is an object of the present invention to provide a joint structure that is able to improve not only in strength but also in rigidity.

### Solution to Problem

A joint structure according to the present invention is a joint structure between an end portion in a longitudinal direction of a hat-section member and another member, wherein the end portion in the longitudinal direction of the hat-section member is discontinuously split into three being a bottom wall end portion and two side wall end portions, a width of the bottom wall end portion is larger than a width of a bottom wall of a central portion of the hat-section member, the bottom wall end portion is welded to the another member, and the two side wall end portions are bent and welded to the another member.

The joint structure according to the present invention is characterized in that the hat-section member is a press-formed part of a metal sheet, and in the above mentioned invention, the bottom wall end portion is spot-welded to the another member at least on a line extended from a ridge line of the bottom wall in the central portion of the hat-section member.

Preferably, in the joint structure according to the present invention, the two side wall end portions are spot-welded to the another member.

Preferably also, or alternatively, in the joint structure according to the present invention, the bottom wall end portion has a shape that becomes wider toward the end portion in the longitudinal direction of the hat-section member.

### Advantageous Effects of Invention

A joint structure according to the present invention makes it possible to improve not only strength but also rigidity.

### Brief Description of Drawings

FIG. 1A is a perspective view of an example of a joint structure in the case of being used in a floor structure of a first embodiment of the present invention.
FIG. 1B is a perspective view of another example of a joint structure in the case of being used in the floor structure of the first embodiment of the present invention.
FIG. 1C is a perspective view of another example of a joint structure in the case of being used in the floor structure of the first embodiment of the present invention.
FIG. 2A is a plan view illustrating a blank shape for producing a hat-section member illustrated in FIG. 1A from one sheet.
FIG. 2B is a plan view illustrating a blank shape for producing a hat-section member illustrated in FIG. 1B from one sheet.
FIG. 2C is a plan view illustrating a blank shape for producing a hat-section member illustrated in FIG. 1C from one sheet.
FIG. 3 is a perspective view illustrating a rigidity test method.
FIG. 4 is a diagram illustrating a relation obtained from the rigidity test illustrated in FIG. 3 between displacement of an applied load input plate and applied load.
FIG. 5 is a diagram illustrating improvement rate of rigidity, obtained by the rigidity tests, of joint test pieces of invention examples relative to a rigidity value of a joint test piece of a conventional example.
FIG. 6 is a perspective view of an example of a joint structure in the case of being used in a floor structure of a second embodiment of the present invention.
FIG. 7A is a plan view illustrating in detail a welded portion between a cross member and a side sill of FIG. 6.
FIG. 7B is an enlarged perspective view illustrating in detail the welded portion between the cross member and the side sill of FIG. 6.
FIG. 8 is a plan view illustrating a blank shape for producing the hat-section member illustrated in FIG. 6 from one metal sheet.
FIG. 9A illustrates a plan view and a front view exhibiting a joint test piece of an invention example 11.
FIG. 9B illustrates a plan view and a front view exhibiting a joint test piece of an invention example 12.
FIG. 9C illustrates a plan view and a front view exhibiting a joint test piece of an invention example 13.
FIG. 10A is a plan view illustrating a blank shape for producing a hat-section member illustrated in FIG. 9A from one metal sheet.
FIG. 10B is a plan view illustrating a blank shape for producing a hat-section member illustrated in FIG. 9B from one metal sheet.
FIG. 10C is a plan view illustrating a blank shape for producing a hat-section member illustrated in FIG. 9C from one metal sheet.
FIG. 11A is a plan view illustrating a joint test piece of a comparative example 14.
FIG. 11B is a plan view illustrating a joint test piece of an invention example 15.
FIG. 11C is a plan view illustrating a joint test piece of an invention example 16.
FIG. 12 is a diagram illustrating the improvement rate of rigidity, obtained by the rigidity tests, of the joint test pieces of the invention examples 11 to 13, 15, and 16 relative to the rigidity of the joint test piece of the comparative example 14.
FIG. 13 is a perspective view illustrating an example of a floor structure of an automobile.
FIG. 14 is a perspective view illustrating an example of a conventional joint structure.

### Description of Embodiments

Joint structures serving as first and second embodiments of the present invention will be described below in detail with reference to the accompanying drawings.

### [First Embodiment]

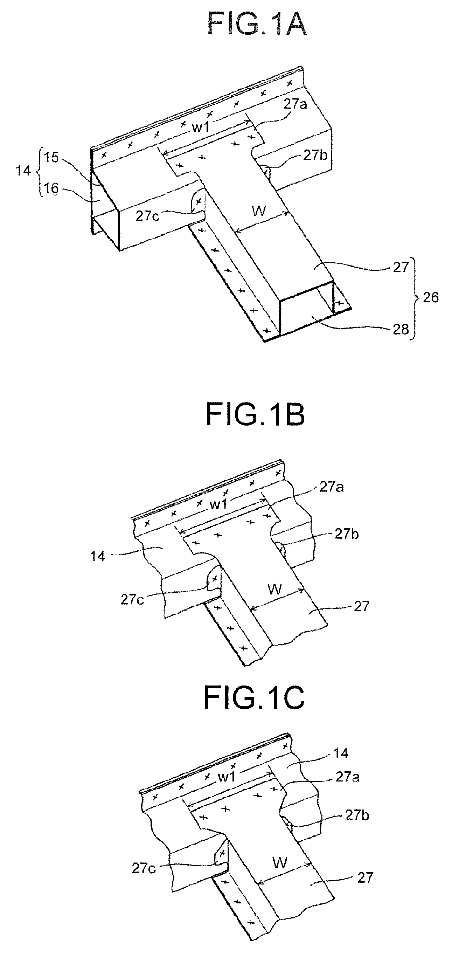

FIGS. 1A to 1C are perspective views of first to third examples, respectively, of joint structures in a floor structure of the first embodiment of the present invention. As illustrated in FIGS. 1A to 1C, the joint structures of the first to third examples are each provided with a side sill 14 and a cross member 26. The side sill 14 is provided with a hat-section member 15 and a flat member 16. The cross member 26 is provided with a hat-section member 27 and a flat member 28. A longitudinal end portion of the hat-section member 27 is split into three portions (a bottom wall end portion 27a, and side wall end portions 27b and 27c), which are joined to wall surfaces of the hat-section member 15. FIGS. 1A to 1C illustrate cases in each of which the longitudinal end portion of the hat-section member 27, which is split into the three portions, has a different shape. The X marks in FIGS. 1A to 1C indicate positions of spot-welded peened points.

Among the bottom wall end portion 27a and the side wall end portions 27b and 27c, the bottom wall end portion 27a is joined to the upper surface of the side sill 14, and has a width w1 larger than a width W of a bottom wall in the central portion of the hat-section member 27. Consequently, a welded portion can have a range wider than the width W of the bottom wall in the central portion of the hat-section member 27.

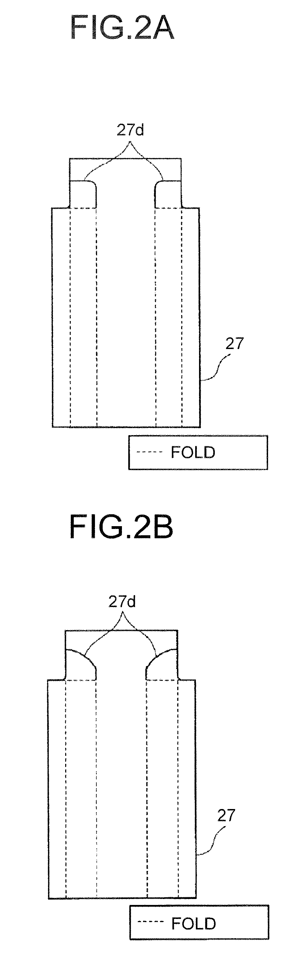

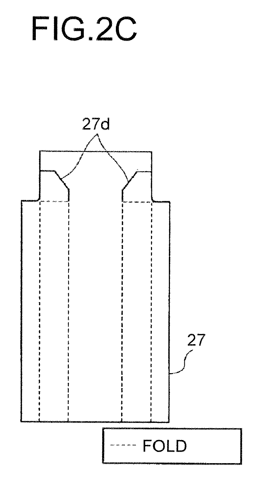

FIGS. 2A to 2C are plan views illustrating methods for producing the hat-section member 27 illustrated in FIGS. 1A to 1C, respectively, from one sheet. FIGS. 2A to 2C illustrate blank (blank sheet) shapes, and FIGS. 1A to 1C illustrate shapes of hat-section members obtained by forming by bending the blanks of FIGS. 2A to 2C, respectively. As illustrated in FIGS. 2A to 2C, before the hat-section member 27 is produced, cutouts 27d are formed so that a flange at the longitudinal end portion of the hat-section member 27 is split into the three portions by the bending work. The cutouts 27d have different shapes among FIGS. 2A to 2C. The cutouts 27d are preferably shaped to be wider as they are closer to the longitudinal end. Consequently, when the end portion of each of the blanks is punched out or cut out to produce the joint structure, there is no need of removing a cut-off piece of the blank, and thus, the joint can be effectively produced using the entire blank. The blank is formed by bending to produce the hat-section member 27 illustrated in each of FIGS. 1A to 1C.

In the case of the conventional joint structure illustrated in FIG. 14, the bottom wall end portion 23a in the center of the three longitudinal end portions of the hat-section member 23 has been capable of being joined to the side sill 14 only in the range smaller than the width W of the bottom wall in the central portion of the hat-section member 23. In contrast, in the first embodiment of the present invention illustrated in FIGS. 1A to 1C, the width w1 of the bottom wall end portion 27a is larger than the width W of the bottom wall in the central portion of the hat-section member 23. As a result, the welded portion has a range wider than the width W of the bottom wall in the central portion of the hat-section member 27, thus making it possible to increase the rigidity of the joint.

Among the three longitudinal end portions 27a, 27b, and 27c of the hat-section member 27, the bottom wall end portion 27a need not lie in the same plane as the central portion of the hat-section member 27, but may be bent to be joined to another part.

### [First Working Example]

In the present example, a cold-rolled steel sheet having a tensile strength of 980 MPa or more and having a thickness of 1.2 mm was used to produce joint test pieces of invention examples 1 to 3 having the same configurations as those illustrated in FIGS. 1A to 1C, respectively. In addition, as a joint test piece of a conventional example that served as an object of comparison, a joint structure was produced that had the bottom wall end portion 23a having the width w1 smaller than the width W of the bottom wall in the central portion of the cross member 22 as illustrated in FIG. 14. Then, rigidity tests were conducted for the joint test pieces of the invention examples and the conventional example.

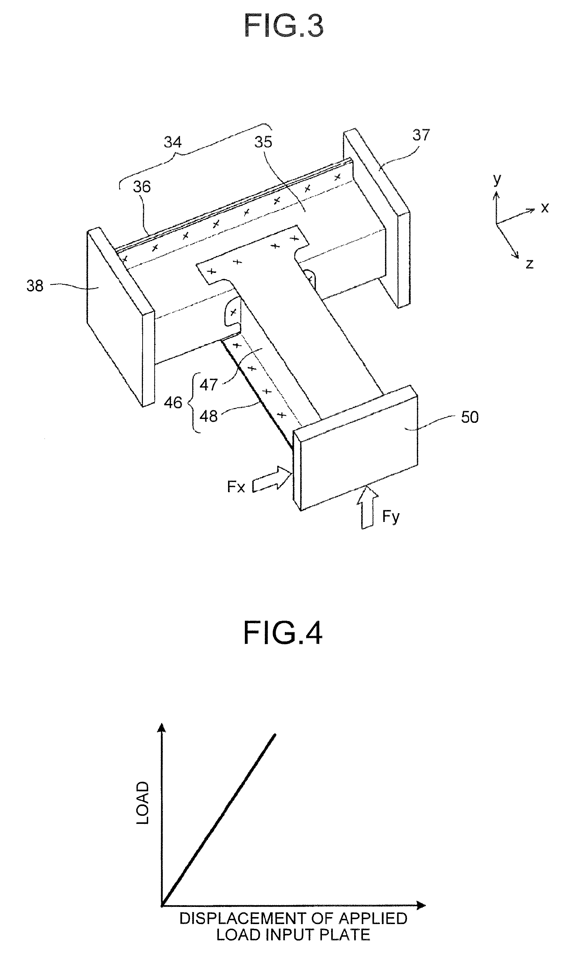

FIG. 3 illustrates a rigidity test method. In the rigidity test, fixing plates 37 and 38 were welded to be attached to both longitudinal ends of a member 34 that was equivalent to the side sill and was composed of a part 35 and a part 36; the fixing plates 37 and 38 were fixed; an applied load input plate 50 was welded to be attached to an end of a member 46 that was equivalent to the cross member and was composed of a part 47 and a part 48; and a load Fx in the x-direction and a load Fy in the y-direction were each applied to the applied load input plate 50.

FIG. 4 illustrates a relation obtained from the rigidity test illustrated in FIG. 3 between displacement of the applied load input plate 50 and load. The rigidity of the joint test piece was defined as a value obtained by dividing the load by the displacement of the applied load input plate 50. The rigidity is higher as the load for the same displacement is larger.

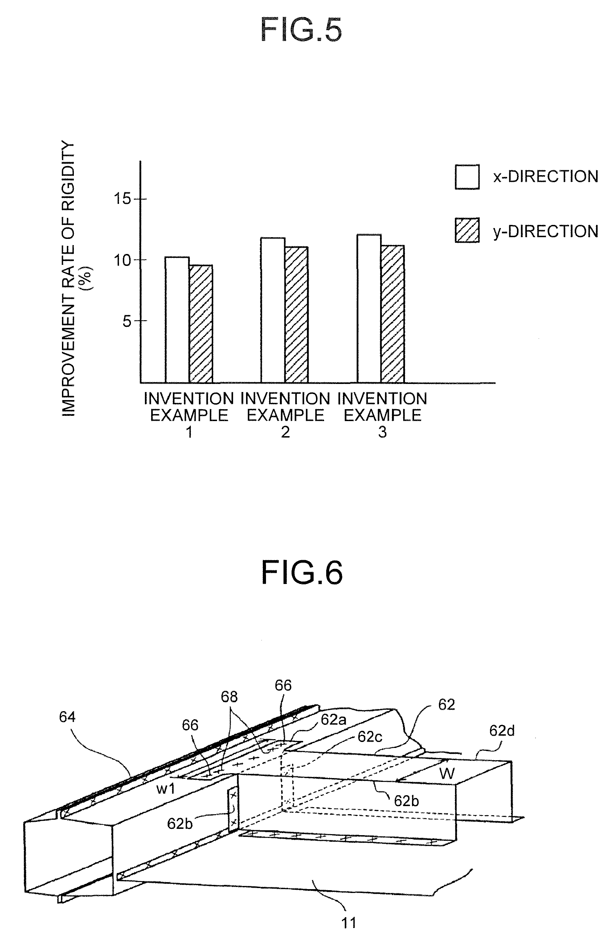

FIG. 5 illustrates results of comparison between the joint test piece of the conventional example and the joint test pieces of the invention examples 1 to 3. The rigidity values of the test pieces are represented by improvement rate of rigidity (in percent) of the joint test pieces of the invention examples 1 to 3 relative to the rigidity of the joint test piece of the conventional example illustrated in FIG. 14. All of the joint test pieces of the invention examples 1 to 3 exhibited the improvement rate of rigidity of positive values with respect to both of the loading directions, thus each having a better rigidity value than that of the joint test piece of the conventional example.

From the results described above, it is found that the joint test pieces of the invention examples 1 to 3 are suitable joint structures for obtaining higher rigidity than that of the joint test piece of the conventional example.

### [Second Embodiment]

FIG. 6 is a perspective view of a first example of a joint structure in a floor structure of a second embodiment of the present invention, and illustrates a structure in which a cross member 62 is joined with a side sill 64.

As illustrated in FIG. 6, in the present embodiment, a longitudinal end portion of the cross member 62 as a hat-section member is split into three portions (a bottom wall end portion 62a, and side wall end portions 62b and 62c), which are each joined to the side sill 64.

Among the three end portions, the bottom wall end portion 62a is joined to the upper surface of the side sill 64, and has a width w1 larger than a width W of a bottom wall in the central portion of the cross member 62. Positions X of spot-welded peened points 66 existing there lie over a range wider than the width W of the bottom wall of the central portion of the cross member 62.

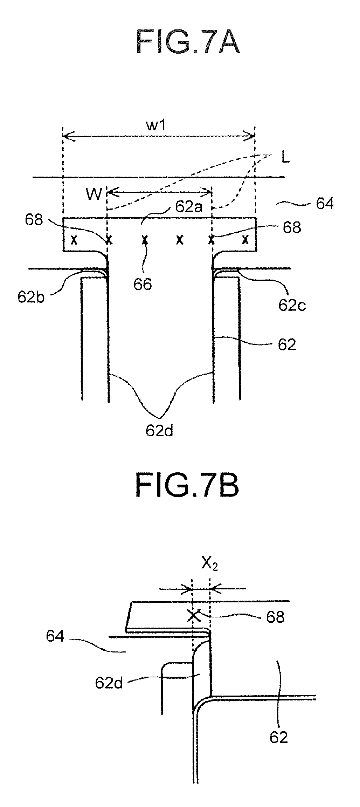

FIGS. 7A and 7B are a plan view and a partial enlarged perspective view of FIG. 7A, respectively, illustrating the welded portion between the cross member 62 and the side sill 64 of FIG. 6. As illustrated in FIG. 7A, spot-welded peened points 68 lying nearest to extended lines L of ridge lines 62d of the cross member 62 are located on the extended lines L of the ridge lines 62d. Herein, the spot-welded peened point 68 being located on the extended line L of the ridge line 62d means that at least an end of a nugget of the spot-welded peened point 68 overlaps with a bending R portion range X₂ of the cross member 62 illustrated in FIG. 7B.

In the case of the conventional joint structure illustrated in FIG. 14, among the three longitudinal end portions 23a, 23b, and 23c of the cross member 23, the bottom wall end portion 23a has been capable of being joined only in the range w1 smaller than the width W of the bottom wall in the central portion of the cross member 23. In contrast, in the present embodiment, the width w1 of the bottom wall end portion 62a is larger than the width W of the bottom wall in the central portion of the cross member 62. As a result, the welded portion can have a range wider than the width W of the bottom wall in the central portion of the cross member 62, thus making it possible to increase the rigidity of the joint.

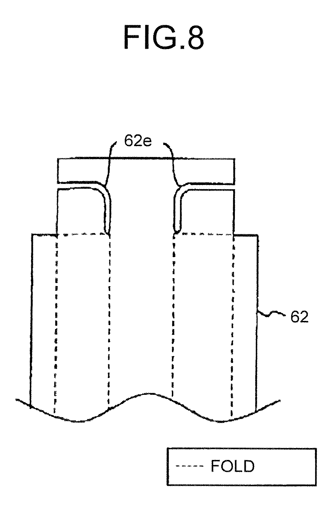

The hat-section member, such as the cross member 62, produced from one sheet preferably has a blank shape provided with cutouts 62e, as illustrated in FIG. 8, so that the longitudinal end portion of the hat-section member is split into three portions. Specifically, the shape of the cutouts becomes wider toward the longitudinal end of the hat-section member. Consequently, the bottom wall end portion among the three end portions is increased in area, and thus, the rigidity can be increased.

### [Second Working Example]

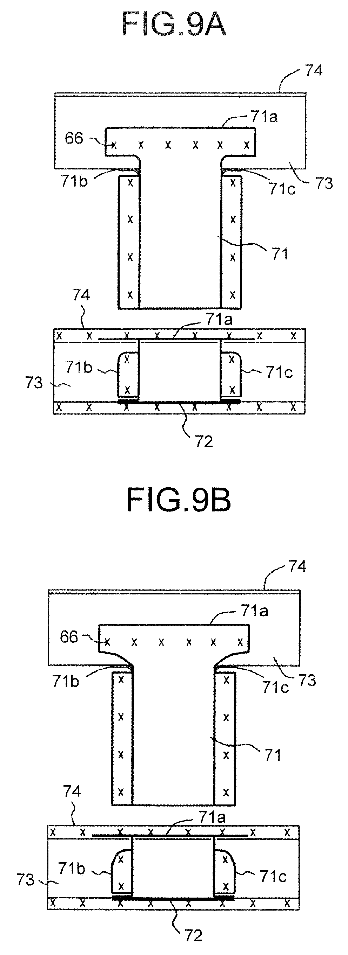

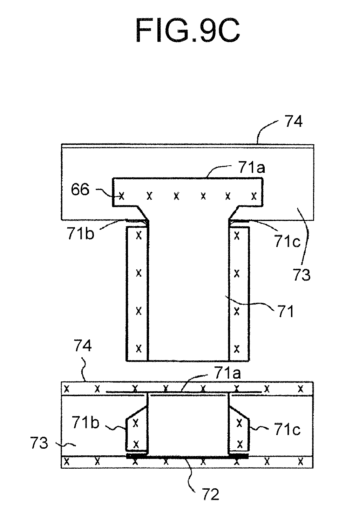

FIGS. 9A to 9C illustrate joint test pieces of invention examples 11 to 13, respectively, in each of which spot-welded peened points are located on the extended lines of the ridge lines of the cross member illustrated in FIGS. 7A and 7B. Each of the joint test pieces is a joint structure based on the second embodiment of the present invention. The joint test piece is composed of the following four parts: a part 71 that is a hat-section test part corresponding to the cross member, a part 72 that is a flat test part, a part 73 corresponding to a hat-section test part of the side sill 64 of FIG. 6, and a part 74 corresponding to a flat test part. A longitudinal end portion of the part 71 corresponding to the cross member is split into three portions 71a, 71b, and 71c, which are joined to wall surfaces of the part 73. Each of FIGS. 9A to 9C illustrates a case in which the longitudinal end portion of the part 71 is split into the three portions 71a, 71b, and 71c having different split shapes from each other. The X marks in FIGS. 9A to 9C indicate the positions of the spot-welded point 66. Each of the parts 71 to 74 used, as material, a cold-rolled steel sheet having a tensile strength of 980 MPa or more and having a thickness of 1.2 mm.

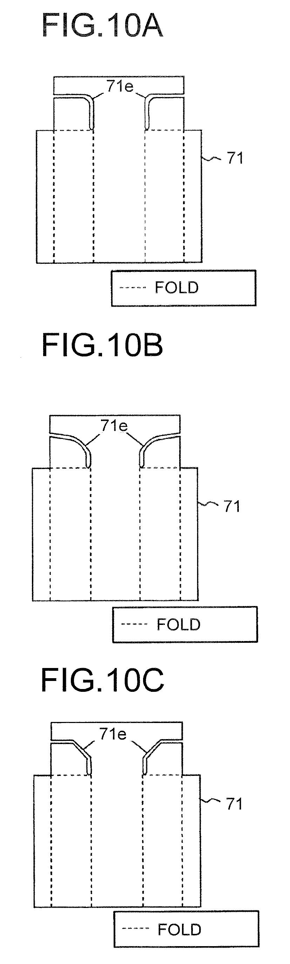

FIGS. 10A to 10C illustrate blank shapes for producing three types of shapes of the part 71 illustrated in FIGS. 9A to 9C, respectively. The three types differ from each other in the shape of cutouts 71e for splitting the longitudinal end portion of the blank into three portions.

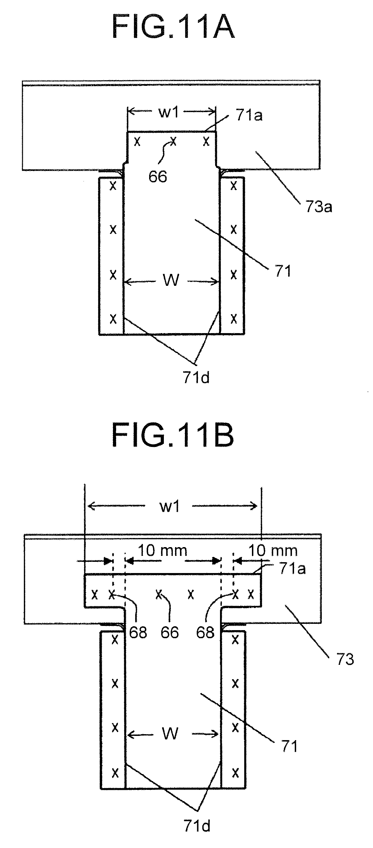

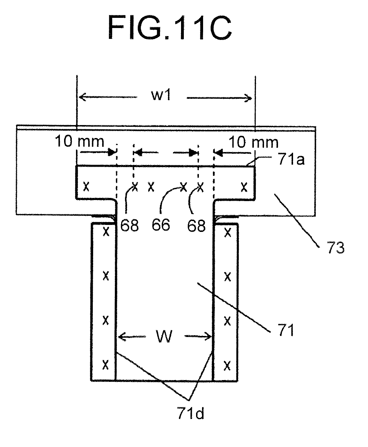

FIG. 11A illustrates a joint test piece of a comparative example 14, and FIGS. 11B and 11C illustrate joint test pieces of invention examples 15 and 16, respectively, that compare spot-welded positions of the present invention. In the joint test piece of the comparative example 14 illustrated in FIG. 11A, among the three longitudinal end portions of the part 71, the bottom wall end portion 71a has a width w1 not more than a width W of a bottom wall in the central portion of the part 71. In each of the joint test piece of the invention example 15 illustrated in FIG. 11B and the joint test piece of the invention example 16 illustrated in FIG. 11C, the width w1 of the bottom wall end portion 71a is larger than the width W of the bottom wall in the central portion of the part 71. In the joint test piece of the invention example 15 illustrated in FIG. 11B, among the spot-welded peened points 66 (having a diameter of approximately 5 mm) of the part 71, the spot-welded peened points 68 lying nearest to ridge lines 71d of the part 71 are deviated outward by 10 mm in the right and left directions from positions on extensions of the ridge lines 71d of the part 71 (outside ends of the bending R portion range X₂ illustrated in FIG. 7B). In the joint test piece of the invention example 16 illustrated in FIG. 11C, among the spot-welded peened points 66 (having a diameter of approximately 5 mm) of the part 71, the spot-welded peened points 68 lying nearest to the ridge lines 71d of the part 71 are deviated inward by 10 mm in the right and left directions from positions on extended lines of the ridge lines 71d of the part 71 (inside ends of the bending R portion range X₂ illustrated in FIG. 7B).

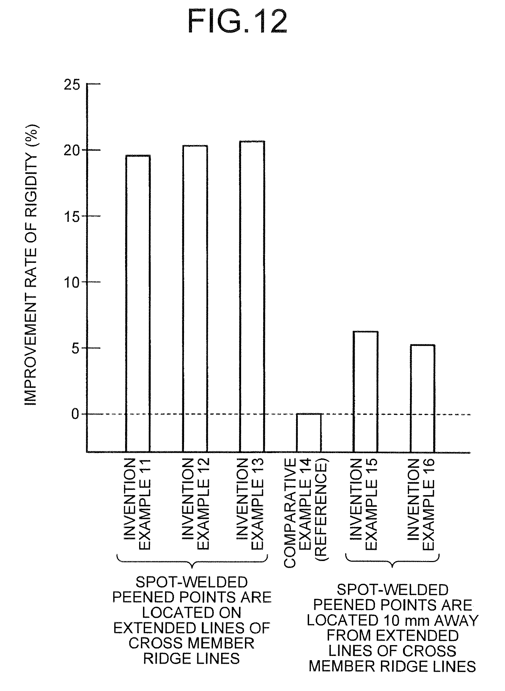

FIG. 12 illustrates rigidity test results for the joint test pieces of the invention examples 11 to 13, 15, and 16 and for the joint test piece of the comparative example 14. The rigidity tests were conducted in the same method as the method illustrated in FIG. 3. The rigidity values of the joint test pieces are represented by the improvement rate of rigidity (in percent) relative to the rigidity of the joint test piece of the comparative example 14 illustrated in FIG. 11A. Each of the joint test pieces of the invention examples 11 to 13, 15, and 16 had a better rigidity value than that of the joint test piece of the comparative example 14. Significantly better rigidity values were provided in the joint test pieces of the invention examples 11 to 13 in which the spot-welded peened points were located on the extended lines of the cross member ridge lines.

From the results described above, it is found that the joint test pieces of the invention examples 11 to 13, 15, and 16 are suitable joint structures for obtaining higher rigidity than that of the joint test piece of the comparative example 14, and in particular that the joint test pieces of the invention examples 11 to 13 are more suitable joint structures.

In the above-described examples, the present invention is applied to the joining of the side sill with the cross member in the floor structure of the automobile. However, the application target of the present invention is not limited to this, and the present invention can be applied to joining of other members for use in vehicles, or members for use in other applications than vehicles.

### Industrial Applicability

According to the present invention, it is possible to provide a joint structure that improves not only strength but also rigidity.

### Reference Signs List

- 14: Side sill
- 15: Hat-section member
- 16: Flat member
- 26: Cross member
- 27: Hat-section member
- 27a: Bottom wall end portion
- 27b, 27c: Side wall end portion
- 27d: Cutout
- 28: Flat member
- 34: Test member
- 35: Hat-section test part
- 36: Flat test part
- 37, 38: Fixing plate
- 46: Test member
- 47: Section test part
- 48: Flat test part
- 50: Applied load input plate
- 62: Cross member
- 62a: Bottom wall end portion
- 62b, 62c: Side wall end portion
- 62d: Ridge line
- 62e, 71e: Cutout
- 64: Side sill
- 66: Spot-welded point

## Claims

1. A joint structure between an end portion in a longitudinal direction of a hat-section member (27; 62) and another member (14; 64), wherein
the end portion in the longitudinal direction of the hat-section member (27; 62) is discontinuously split into three being a bottom wall end portion (27a; 62a) and two side wall end portions (27b, 27c; 62b, 62c),
a width of the bottom wall end portion (27a; 62a) is larger than a width of a bottom wall of a central portion of the hat-section member (27; 62),
the bottom wall end portion (27a; 62a) is welded to the another member (14; 64), and
the two side wall end portions (27b, 27c; 62b, 62c) are bent and welded to the another member; **characterized in that**:
the hat-section member (27; 62) is a press-formed part of a metal sheet; and
the bottom wall end portion (27a; 62a) is spot-welded to the another member (14; 64) at least on a line extended from a ridge line (62d) of the bottom wall in the central portion of the hat-section member (27; 62).

2. The joint structure according to claim 1, wherein the two side wall end portions (27b, 27c; 62b, 62c) are spot-welded to the another member (14; 64).

3. The joint structure according to any claim 1 or 2, wherein the bottom wall end portion (27a; 62a) has a shape that becomes wider toward the end portion in the longitudinal direction of the hat-section member (27; 62).

## Patentansprüche

1. Verbindungsstruktur zwischen einem Endteil in Längsrichtung eines Hutabschnittselementes (27; 62) und einem weiteren Element (14; 64), wobei
der Endteil in Längsrichtung des Hutabschnittselementes (27; 62) kontinuierlich in drei aufgespalten ist, die ein Bodenwand-Endteil (27a; 62a) und zwei Seitenwand-Endteile (27b; 27c; 62b; 62c) sind,
wobei eine Breite des Bodenwand-Endteils (27a; 62a) größer als eine Breite einer Bodenwand eines Mittelteils des Hutabschnittselementes (27; 62) ist,
der Bodenwand-Endteil (27a; 62a) an ein weiteres Element (14; 64) angeschweißt ist, und
die zwei Seitenwand-Endteile (27b, 27c; 62b, 62c) gebogen und an ein weiteres Element angeschweißt sind; **dadurch gekennzeichnet, dass**:
das Hutabschnittselement (27; 62) ein pressgeformtes Teil eines Metallblechs ist; und
der Bodenwand-Endteil (27a; 62a) an ein weiteres Element (14; 64) punktgeschweißt ist, mindestens auf einer Linie, die sich von einer Gratlinie (62d) der Bodenwand im Mittelteil des Hutabschnittselementes (27; 62) aus erstreckt.

2. Verbindungsstrukturen nach Anspruch 1, wobei die zwei Seitenwand-Endteile (27b, 27c; 62b, 62c) an ein weiteres Element (14; 64) angeschweißt sind.

3. Verbindungsstrukturen nach einem der Ansprüche 1 oder 2, wobei der Bodenwand-Endteil (27a; 62a) eine Form hat, die zum Endteil in der Längsrichtung des Abschnittselementes (27; 62) hin breiter wird.

## Revendications

1. Joint structurel entre une partie d'extrémité dans une direction longitudinale d'un élément à section oméga (27 ; 62) et un autre élément (14 ; 64),
où
la partie d'extrémité dans une direction longitudinale d'un élément à section oméga (27 ; 62) est divisée de manière discontinue en trois dont une partie d'extrémité de paroi de fond (27a ; 62a) et deux parties d'extrémité de parois latérales (27b, 27c ; 62b, 62c),
une largeur de la partie d'extrémité de paroi de fond (27a ; 62a) est plus grande qu'une largeur de la pari de fond d'une partie centrale de l'élément à section oméga (27 ; 62),
la partie d'extrémité de paroi de fond (27a ; 62a) est soudée sur un autre élément (14 ; 64) et
les deux parties d'extrémité de parois latérales (27b, 27c ; 62b, 62c) sont cintrées et soudées sur l'autre élément,
**caractérisé en ce que**
l'élément à section oméga (27 ; 62) est une partie emboutie d'une feuille métallique et
la partie d'extrémité de paroi de fond (27a ; 62a) est soudée par points sur l'autre élément (14 ; 64) au moins sur une ligne s'étendant à partir d'une ligne de crête (62d) de la paroi de fond dans la partie centrale de l'élément à section oméga (27 ; 62).

2. Joint structurel selon la revendication 1, **caractérisé en ce que** les deux parties d'extrémité de parois latérales (27b, 27c ; 62b, 62c) sont soudées par points sur l'autre élément (14 ; 64).

3. Joint structurel selon la revendication 1 ou 2, **caractérisé en ce que** la partie d'extrémité de paroi de fond (27a ; 62a) présente une forme qui s'élargit vers la partie d'extrémité dans une direction longitudinale d'un élément à section oméga (27 ; 62).
